# EUROPEAN PATENT SPECIFICATION

(11) **EP 0 566 780 B1**
(45) Date of publication and mention of the grant of the patent: **11.03.1998**
(21) Application number: 92121839.2
(22) Date of filing: 22.12.1992
(51) Int. Cl.: C08L 79/08, C08L 63/00, C08G 59/40

(54) **Heat-resistant resin composition**
Hitzebeständige Harzzusammensetzung
Composition de résine résistante à la chaleur

(30) Priority: 22.04.1992 JP 102925/92
(43) Date of publication of application: 27.10.1993
(73) Proprietor: KONISHI CO., LTD., Chuo-ku, Osaka (JP)
(72) Inventor: Sato, Shinichi, Urawa-shi, Saitama-ken (JP); Hamachi, Kenji, Urawa-shi, Saitama-ken (JP); Nojiri, Hisao, Oomiya-shi, Saitama-ken (JP)
(74) Representative: Hansen, Bernd, Dr. Dipl.-Chem.

(56) References cited:
- EP-A- 0 354 033
- US-A- 4 283 521
- US-A- 4 816 531
- PATENT ABSTRACTS OF JAPAN vol. 13, no. 553 (C-663)(3901) 8 December 1989 & JP-A-12 29 029

## Description

The present invention relates to a liquid, thermosetting, solventless heat-resistant resin composition excellent in storage stability, a heat-resisting property, and workability.

In recent years, strong demand has increasingly arisen for increasing the heat resistance of resin components such as adhesives in electronic equipment and mechanical parts. For these application purposes, a lot of attempts have been made for resins whose adhesive properties are improved by modifying a maleimide resin excellent in heat-resisting property with an epoxy resin. Among them all, in order to improve the storage stability, when a bismaleimide resin is modified with an epoxy resin only, precipitation tends to undesirably occur. In order to improve the resin in this respect, Published Unexamined Japanese Patent Application No. 1-229029 discloses a resin composition obtained such that a polymaleimide resin and an epoxy resin are modified with a compound, as a third component, containing one hydroxyl group and at least one epoxy group.

The resin composition obtained by modifying the polymaleimide and epoxy resins with the compound containing one hydroxyl group and at least one epoxy group as disclosed in Published Unexamined Japanese Patent Application No. 1-229029 is excellent in heat-resisting property, but the heat-resisting property is degraded by a degree corresponding to the addition of this modified product.

The present invention has been made to solve the above conventional problem, and has as its object to provide a liquid, thermosetting, solventless heat-resistant resin composition excellent in storage stability, a heat-resisting property,'and workability.

The present invention has been achieved by extensive studies of the present inventors to achieve the above object of the present invention. There is provided a liquid, solventless heat-resistant resin composition which contains a minimum amount of the above-mentioned modified product, is less toxic, and is soluble in a general purpose solvent. That is, the present invention provides a heat curable two-part heat-resistant resin composition comprising (A) a resin composition as a first part and (B) a hardener of an epoxy resin as a second part, said composition (A) being prepared by heating a mixture of (a) a polymaleimide resin represented by the following general formula: 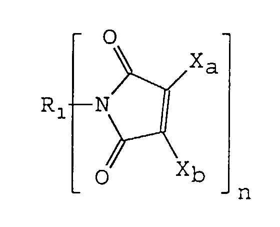 (wherein R₁ represents an organic group having a valency of n, Xₐ and X_{b} represent monovalent atoms or groups which are the same or different and selected from a hydrogen atom, a halogen atom, and an organic group, and n represents 1 to 4), (b) an epoxy resin having at least two epoxy groups in a molecule thereof, and (c) a compound containing at least one hydroxyl group, at least one carboxyl group, or both at least one hydroxyl group and at least one carboxyl group in a molecule thereof, wherein an amount of the compound as the component (c) of composition (A) falls within a range of 0.1 to 5 parts by weight based on 100 parts by weight of the polymaleimide resin as the component (a) of composition (A) and said composition (A) is prepared by heating at 110°C to 160°C the mixture of components (a), (b) and (c) of composition (A).

Examples of the polymaleimide as one component (a) of the composition (A) are N,N'-4,4'-diphenyletherbismaleimide, N,N'-4,4'-diphenylsulfonebismaleimide, N,N'-4,4'-diphenylmethanebismaleimide, N,N'-phenylenebismaleimide, N,N'-3,3'-dimethyl-5,5'-diethyl-4,4'-diphenylmethanebis maleimide, a trinuclide thereof, and a tetranuclide thereof. These materials can be used singly or in a mixture of at least two thereof.

Examples of the epoxy resin as one component (b) of the composition (A) are a bisphenol A epoxy resin represented by the following formula: 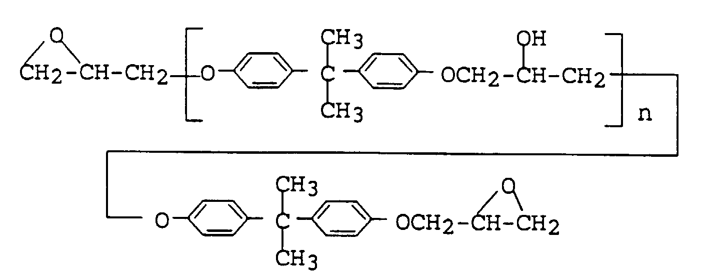 (n = 0 : 87.2%, n = 1 : 11.1%, n = 2 : 1.5%) and derived from bisphenol A 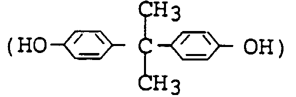 and epichlorohydrin 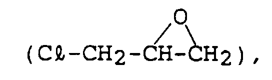 a bisphenol F epoxy resin represented by the following formula: 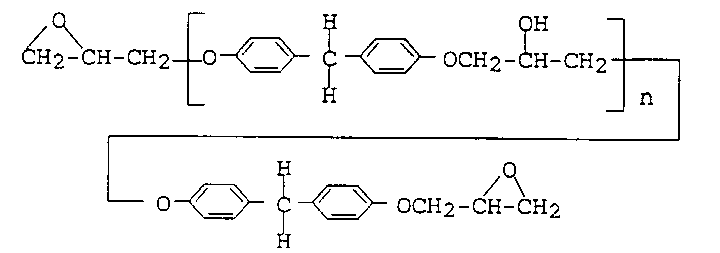 (n = 0 : 87.2%, n = 1 : 11.1%, n = 2 : 1.5%) and derived from bisphenol F 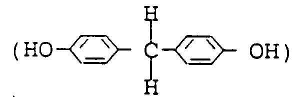 and epichlorohydrin, a cresol novolak type epoxy resin, a phenol novolak type epoxy resin, an epoxy resin consisting of glycidylated amine, an aliphatic or alicyclic epoxy resin, an epoxy resin having a heterocyclic ring, and an epoxy resin containing a siloxane bond. These epoxy resins can be used singly or in a combination of at least two thereof.

Compounds (c)-1, (c)-2, and (c)-3 below can be used as one component (c) of the composition (A). These compounds can be singly used or in a combination of at least two thereof.

### (c)-1 Compound Containing at least one Hydroxyl Group

Examples of this compound are phenol, cresols, xylenols, hydroxyl methyl benzoate, nonyl phenol, methoxy phenol, p-octyl phenol, t-butyl phenol, phenyl phenol, polyoxyethylene alkylphenyl ether, tetrahydronaphthol, menthol, phenylethyl alcohol, benzyl alcohol, cyclohexanol, hydroxyacetophenone, hydroxybenzaldehyde, hydroxybenzyl alcohol, hydroxybiphenyl, hydroxymethoxybenzaldehyde, hydroxymethoxyacetophenone, hydroxymethoxydiphenyl, hydroxymethoxypropenyl benzene, hydroxymethyl pyrone, hydroxypropiophenone, dihydroxybenzaldehyde, resorcinol, hexyl resorcinol, methyl resorcinol, pyrogallol, methyl pyrogallol, dihydroxyacetophenone, dihydroxybenzophenone, dihydroxybiphenyl, dihydroxynaphthalene, cyclohexanediol, dihydroxybenzyl alcohol, hydroxyphenethyl alcohol, butanediol, hexanetriol, catechol, hydroquinone, dihydroxytoluene, hexynediol, inositol, pentanediol, hexanediol, phloroglucinol, purpurin, quinizarin, anthrarufin, bishydroxyphenylpropane, bishydroxyphenylsulfone, propanediol, butyl pyrocatechol, chlorohydroquinone, dicyanohydroquinone, dihydroxyacetone, tetrahydroxyanthracene, dihydroxydiphenylmethane, dodecanediol, methylpentanediol, 1,3-bis(3-hydroxylpropyl)tetramethyldisiloxane, vanillyl alcohol, various phenol resins, and various alcohols.

### (c)-2 Compound Containing at least one Carboxyl Group

Examples of this compound are benzoic acid, phenylacetic acid, phenylpropanoic acid, phenylbutyric acid, bromobenzoic acid, toluic acid, methoxybenzoic acid, cyclohexane carboxylic acid, dicarboxydiphenyl, malonic acid, mellitic acid, pyromellitic acid, trimellitic acid, phthalic acid, and isophthalic acid.

### (c)-3 Compound Containing at least one Hydroxyl Group and at least one Carboxyl Group

Examples of this compound are benzilic acid, caffeic acid, camphoric acid, cresotinic acid, gallic acid, dihydroxybenzoic acid, hydroxymethoxybenzoic acid, mandelic acid, hydroxymethylbenzoic acid, phenolphthalin, protocatechuic acid, quinic acid, hydroxynaphthoic acid, hydroxyphenylacetic acid, hydroxyphenylisovaleric acid, hydroxyphenylpropionic acid, hydroxytoluic acid, and tropic acid.

The components (A)(a), (A)(b), and (A)(c) are simultaneously mixed under heating at 110°C to 200°C for 0.3 to 24 hours. Gelling and precipitation cannot be prevented by the presence of the component (A)(c) only for the polymaleimide resin as the component (A)(a). However, when the component (A)(b) is added and mixed under heating with the above mixture, a solventless composition (A) which is a liquid at room temperature to a temperature of about 80°C can be prepared.

The amount of the component (A)(c) falls within the range of 0.1 to 5 parts by weight based on 100 parts by weight of the polymaleimide resin as the component (A)(a).

When the heat-resisting property of the objective composition is taken into consideration, the amount of the epoxy resin as the component (A)(b) falls within the range of preferably 20 to 500 parts by weight based on 100 parts by weight of the polymaleimide resin as the component (A)(a). However, for the purpose of retaining good physical properties during heating and preventing precipitation, the amount of the epoxy resin as the component (A)(b) falls within the range of more preferably 50 to 300 parts by weight.

The components (A)(a), (A)(b), and (A)(c) are heated at a temperature of 110°C to 160°C. By employing the above conditions, a more preferable composition (A) can be obtained.

The following general epoxy resin hardeners can be used as the hardener as the component (B).

### (B)-1 Polyamine

Examples of the polyamine are general, liquid or solid aromatic and alicyclic polyamines (e.g., diaminodiphenylmethane, diaminodiphenylsulfone, metaphenylenediamine, diaminodiphenylether, and xylylenediamine).

### (B)-2 Acid Anhydride

Examples of the acid anhydride are methyltetrahydrophthalic anhydride, methylhexahydrophthalic anhydride, trialkyltetrahydrophthalic anhydride, pyromellitic anhydride, benzophenone tetracarboxylic anhydride, and methylcyclohexene dicarboxylic anhydride.

### (B)-3 Polyhydric Phenol

Examples of the polyhydric phenol are bishydroxyphenylpropane, bishydroxyphenylmethane, and a novolak phenol resin.

### (B)-4 Imidazole

Examples of the imidazole are 2-methylimidazole, 2-phenylimidazole, and 2-ethyl-4-methylimidazole.

In addition to the above hardeners, epoxy resin hardeners such as amine, dicyandiamide, polymercaptan, and onium salt can be used, as needed. These hardeners can be used singly or in a combination of at least two thereof.

The amount of the component (B) falls within the range of preferably 0.2 to 60 parts by weight based on 100 parts by weight of the composition (A).

The composition (A) and the component (B) are mixed, and the resultant mixture is heated for curing at a temperature of preferably 80°C to 250°C, and more preferably 170°C to 230°C to obtain a heat-resistant resin composition. The heating time can be properly selected in accordance with the target performance.

In order to reduce the shrinkage and the thermal expansion during curing and improve various properties such as abrasion resistance, mechanical strength, thermal conductivity, and electrical conductivity, an inorganic filler, and a metal powder, may be added. Within the range which does not impair the object of the present invention, in order to improve toughness and flexibility, at least one of silicone resin, various solid or liquid rubber materials can be added.

In addition, in order to reduce the viscosity of the objective composition, in the composition (A) of the present invention, at least one of the following compounds may be freely added within the range which does not impair the heat-resisting property which is the object of the present invention. Examples of such a compound are allyl alcohol, furfuryl alcohol, divinyl benzene, vinyl toluene, styrene, N-vinyl pyrrolidone, triallyl trimellitate, triallyl isocyanurate, triallyl cyanurate, diallyl phthalate, various acrylates (e.g., trimethylolpropane triacryalte), various methacrylates (e.g., glycidyl methacrylate), and hydroxycyclopentadiene.

When a polymaleimide (particularly, general purpose bismaleimide) and an epoxy resin are mixed under heating at a high temperature (e.g., 150°C), the mixture can be set in a homogeneous liquid state. However, when the mixture is cooled to room temperature, a large amount of precipitate tends to settle. The present invention has been made to improve this drawback and overall compatibility. That is, when a compound containing at least one hydroxyl group, at least one carboxyl group, or both at least one hydroxyl group and at least one carboxyl group is added in a small amount, precipitation of the maleimide is suppressed. It is assumed that a charge transfer complex formed between the compound and maleimide, used as an initiating radical species, causes maleimide radical polymerization. The resultant reaction product is assumed to be present together with the nonreacted epoxy resin with good compatibility. A prepolymer of the resultant composition (A) is cured by the epoxy resin hardener as the component (B), thereby obtaining a heat-resistant resin composition having good workability.

### Examples 1-8 and Comparative Examples 1 - 4

In Examples 1 - 8 and Comparative Examples 1 to 4, components (A), i.e., compositions (A) and components (B) and their mixing amounts shown in Tables 1 and 2 were used. Components (A) were obtained such that polymaleimide resins as components (A)(a), epoxy resins as components (A)(b), and compounds as components (A)(c) each containing at least one hydroxyl group, at least one carboxyl group, or both at least one hydroxyl group and at least one carboxyl group in each molecule thereof, all of which were shown in Tables 1 and 2, were charged in 1ℓ autoclaves and were reacted at 145°C for 2 hours. In Comparative Example 1, a component (A) was obtained except that a component (A)(c) was excluded. In Comparative Examples 2 to 4, components (A) were obtained such that components (A)(a) and (A)(c) were excluded. In Comparative Examples 2 to 4, therefore, only components (A)(b) were used as the components (A). Although homogeneous liquid products were obtained as the components (A) in Examples 1-8 , the component (A) excluding the component (A)(c) in Comparative Example 1 resulted in precipitation of the component (A)(a), and a homogeneous liquid reaction product could not be obtained.

Each mixture consisting of the components (A) and (B) was heated for curing at 80°C for 2 hours, then at 120°C for an hour, and finally at 200°C for 35 hours. The glass transition points Tg [measured by the TMA (thermomechanical analysis) method] and the flexural strengths (measurement temperature: 150°C or 200°C) of the resultant cured compositions in Examples 1 to 7,
and Comparative Examples 2 to 4 were measured, and the results are shown in Tables 1 and 2.

In Tables 1 and 2, when Examples are compared with the Comparative Examples using only the epoxy resins as the components (A), the heat-resisting properties of the resin compositions in Examples are apparently improved due to the addition of the polymaleimide resins.

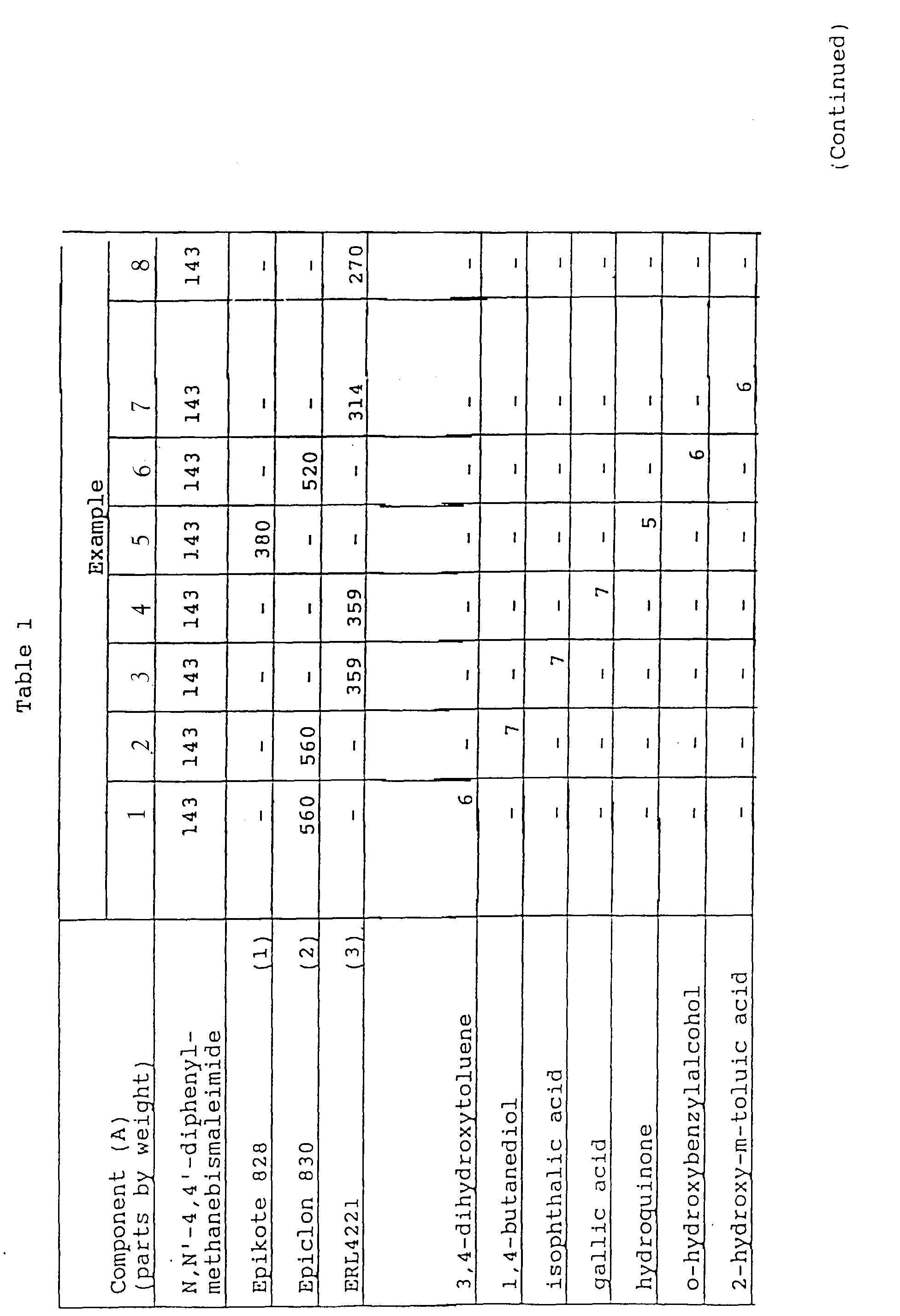

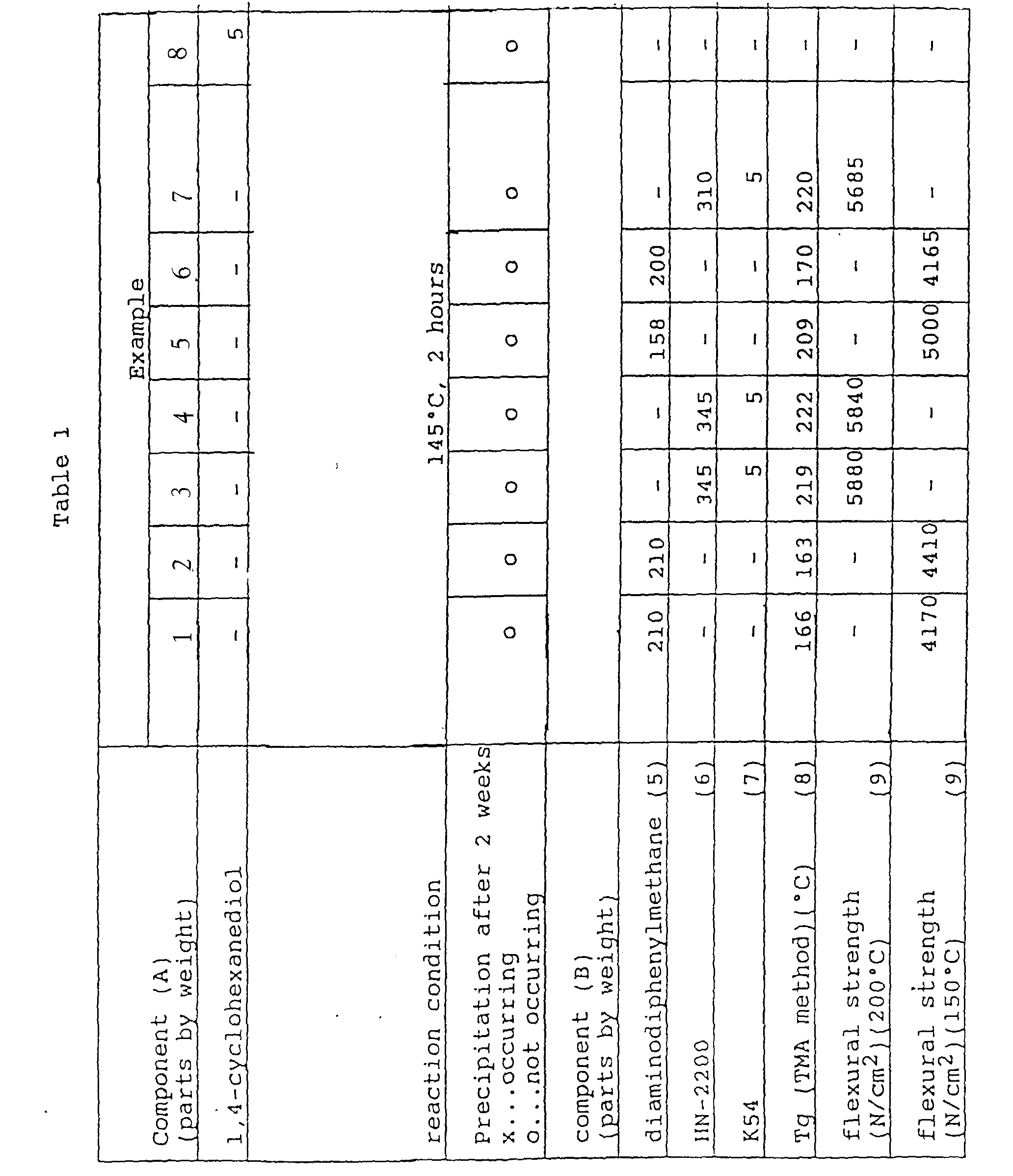

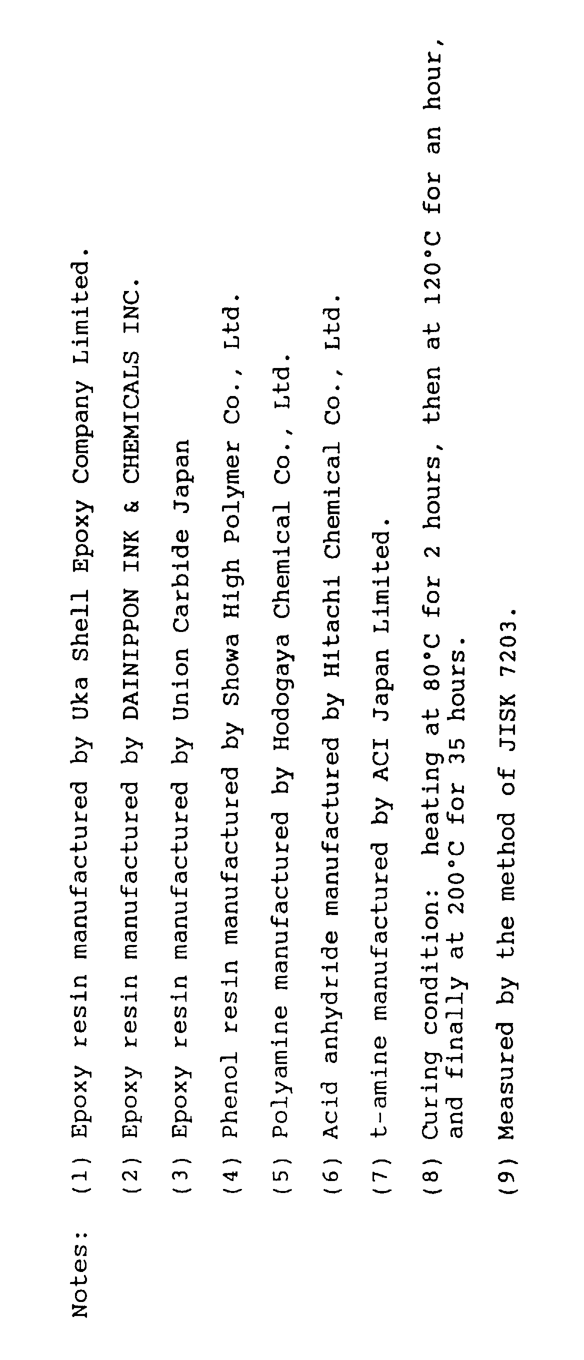

**Table 2**

| Component (A) (parts by weight) | Comparative Example | | | |
|---|---|---|---|---|
| | 1 | 2 | 3 | 4 |
| N,N'-4,4'-diphenylmethanebismaleimide | 143 | - | - | - |
| Epikote 828 (1) | 300 | 100 | - | - |
| Epiclon 830 (2) | 300 | - | 100 | - |
| ERL4221 (3) | - | - | - | 100 |
| 3-(p-hydroxyphenyl) propionic acid | - | - | - | - |
| 3,4-dihydroxytoluene | - | - | - | - |
| 1,4-butanediol | - | - | - | - |
| isophthalic acid | - | - | - | - |
| gallic acid | - | - | - | - |
| hydroquinone | - | - | - | - |
| o-hydroxybenzylalcohol | - | - | - | - |
| 2-hydroxy-m-toluic acid | - | - | - | - |
| CKM-5254 (4) | - | - | - | - |
| 1,4-cyclohexanediol | - | - | - | - |
| phenol | - | - | - | - |
| cyclohexanol | - | - | - | - |
| benzoic acid | - | - | - | - |
| reaction condition | - | - | - | - |
| Precipitation after 2 weeks x...occurring o...not occurring | x | - | - | - |

| Component (B) (parts by weight) | Comparative Example | | | |
|---|---|---|---|---|
| | 1 | 2 | 3 | 4 |
| diaminodiphenylmethane (5) | - | 25 | 25 | - |
| HN-2200 (6) | - | - | - | 68 |
| K54 (7) | - | - | - | 2 |
| Tg (TMA method)(°C) (8) | - | 168 | 138 | 160 |
| flexural strength (9) (N/cm²)(200°C) (9) | - | - | - | 650 |
| flexural strength (N/cm²) (150°C) (9) | - | 3910 | 390 | - |
| Notes: (1) to (9); Same as Table 1 | | | | |

A heat-resistant resin composition according to the present invention is a heat-resistant resin composition obtained by homogeneously modifying with good compatibility a polymaleimide resin and an epoxy resin with the use of a small amount of a third component. This modified composition is also excellent in storage stability. Therefore, the heat-resistant resin composition according to the present invention can be used with good workability in a variety of applications such as adhesives and castings which are excellent in heat-resisting property.

## Claims

1. A heat curable two-part heat-resistant resin composition comprising (A) a resin composition as a first part and (B) a hardener of an epoxy resin as a second part, said composition (A) being prepared by heating a mixture of
(a) a polymaleimide resin represented by the following general formula: 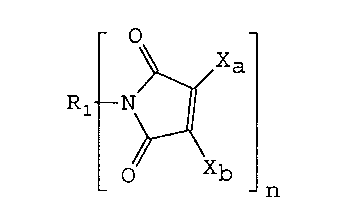 (wherein R₁ represents an organic group having a valency of n, Xₐ and X_{b} represent monovalent atoms or groups which are the same or different and selected from a hydrogen atom, a halogen atom, and an organic group, and n represents 1 to 4),
(b) an epoxy resin having at least two epoxy groups in a 15 molecule thereof, and
(c) a compound containing at least one hydroxyl group, at least one carboxyl group, or both at least one hydroxyl group and at least one carboxyl group in a molecule thereof, wherein an amount of the compound as the component (c) of composition (A) falls within a range of 0.1 to 5 parts by weight based on 100 parts by weight of the polymaleimide resin as the component (a) of composition (A) and said composition (A) is prepared by heating at 110°C to 160°C the mixture of components (a), (b) and (c) of composition (A).

2. A composition according to claim 1, characterized in that the composition (A) further contains at least one member selected from the group consisting of allyl alcohol, furfuryl alcohol, divinyl benzene, vinyl toluene, styrene, N-vinyl pyrrolidone, triallyl trimellitate, triallyl isocyanurate, triallyl cyanurate, diallyl phthalate, acrylates, methacrylates, and hydroxycyclopentadiene.

3. A composition according to claim 1, further containing at least one member selected from the group consisting of an inorganic filler and a metal powder.

4. A composition according to claim 1, further containing at least one member selected from the group consisting of a silicone resin, solid rubber, and liquid rubber.

5. A composition according to claim 1, characterized in that the polymaleimide resin as the component
(a) of composition (A) is at least one member selected from the group consisting of N,N'-4,4'-diphenyletherbismaleimide, N,N'-4,4'-diphenylsulfonebismaleimide, N,N'-4,4'-diphenylmethanebismaleimide, N,N'-phenylenebismaleimide, N,N'-3,3'-dimethyl-5,5'-diethyl-4,4'-diphenylmethanebismaleimide, a trinuclide thereof, and a tetranuclide thereof.

6. A composition according to claim 1, characterized in that the epoxy resin as the component (b) of composition (A) is at least one member selected from the group consisting of a bisphenol A epoxy resin, a bis-phenol F epoxy resin, a cresol novolak type epoxy resin, a phenol novolak type epoxy resin, an epoxy resin consisting of glycidylated amine, an aliphatic and alicyclic epoxy resins, an epoxy resin having a heterocyclic ring, and an epoxy resin containing a siloxane bond.

7. A composition according to claim 1, characterized in that the compound containing at least one hydroxyl group as the component (c) of composition (A) is at least one member selected from the group consisting of phenol, cresols, xylenols, hydroxyl methyl benzoate, nonyl phenol, methoxy phenol, p-octyl phenol, t-butyl phenol, phenyl phenol, polyoxyethylene alkylphenyl ether, tetrahydronaphthol, menthol, phenylethyl alcohol, benzyl alcohol, cyclohexanol, hydroxyacetophenone, hydroxybenzaldehyde, hydroxybenzyl alcohol, hydroxybiphenyl, hydroxymethoxybenzaldehyde, hydroxymethoxyacetophenone, hydroxymethoxydiphenyl, hydroxymethoxyproenpyl benzene, hydroxymethyl pyrone, hydroxypropiophenone, dihydroxybenzaldehyde, resorcinol, hexyl resorcinol, methyl resorcinol, pyrogallol, methyl pyrogallol, dihydroxyacetophenone, dihydroxybenzophenone, dihydroxybiphenyl, dihydroxynaphthalene, cyclohexanediol, dihydroxybenzyl alcohol, hydroxyphenethyl alcohol, butanediol, hexanetriol, catechol, hydroquinone, dihydroxytoluene, hexynediol, inositol, pentanediol, hexanediol, phloroglucinol, purpurin, quinizarin, anthrarufin, bishydroxyphenylpropane, bishydroxyphenylsulfone, propanediol, butyl pyrocatechol, chlorohydroquinone, dicyanohydroquinone, dihydroxyacetone, tetrahydroxyanthracene, dihydroxydiphenylmethane, dodecanediol, methylpentanediol, 1,3-bis(3-hydroxylpropyl)tetramethyldisiloxane, vanillyl alcohol, phenol resins, and alcohols.

8. A composition according to claim 1, characterized in that the compound containing at least one carboxyl group as the component (c) of composition (A) is at least one member selected from the group consisting of benzoic acid, phenylacetic acid, phenylpropanoic acid, phenylbutyric acid, bromobenzoic acid, toluic acid, methoxybenzoic acid, cyclohexane carboxylic acid, dicarboxydiphenyl, malonic acid, mellitic acid, pyromellitic acid, trimellitic acid, phthalic acid, and isophthalic acid.

9. A composition according to claim 1, characterized in that the compound containing at least one hydroxyl group and at least one carboxyl group as the component (c) of compo sition (A) is at least one member selected from the group consisting of benzilic acid, caffeic acid, camphoric acid, cresotinic acid, gallic acid, dihydroxybenzoic acid, hydroxymethoxybenzoic acid, mandelic acid, hydroxymethylbenzoic acid, phenolphthalin, protocatechuic acid, quinic acid, hydroxynaphthoic acid, hydroxyphenylacetic acid, hydroxyphenylisovaleric acid, hydroxyphenylpropionic acid, hydroxytoluic acid, and tropic acid.

10. A composition according to claim 1, characterized in that the epoxy resin hardener as the component (B) is at least one member selected from the group consisting of a polyamine, an acid anhydride, a polyhydric phenol, an imidazole, an amine, dicyandiamide, polymercaptan, and an onium salt.

11. A composition according to claim 9,
characterized in that the polyamine is at least one member selected from the group consisting of diaminodiphenylmethane, diaminodiphenylsulfone, metaphenylenediamine, diaminodiphenylether, and xylylenediamine.

12. A composition according to claim 9, characterized in that the acid anhydride is at least one member selected from the group consisting of methyltetrahydrophthalic anhydride, methylhexahydrophthalic anhydride, trialkyltetrahydrophthalic anhydride, pyromellitic anhydride, benzophenone tetracarboxylic anhydride, and methylcyclohexene dicarboxylic anhydride.

13. A composition according to claim 9, characterized in that the polyhydric phenol is at least one member selected from the group consisting of bishydroxyphenylpropane, bishydroxyphenylmethane, and a novolak phenol resin.

14. A composition according to claim 9, characterized in that the imidazole is at least one member selected from the group consisting of 2-methylimidazole, 2-phenylimidazole, and 2-ethyl-4-methylimidazole.

15. A composition according to claim 1, characterized in that an amount of the epoxy resin as the component (b) of composition (A) falls within a range of 20 to 500 parts by weight based on 100 parts by weight of the polymaleimide resin as the component (a) of composition (A).

16. A composition according to claim 1, characterized in that an amount of the epoxy resin as the component (b) of composition (A) falls within a range of 50 to 300 parts by weight based on 100 parts by weight of the polymaleimide resin as the component (a) of composition (A).

17. A composition according to claim 1, characterized in that an amount of the epoxy resin hardener as the component (B) falls within a range of 0.2 to 60 parts by weight based on 100 parts by weight of the composition (A).

18. A composition according to claim 1, characterized in that the mixture of the composition (A) and the component (B) is heated at 80°C to 250°C.

19. A composition according to claim 1, characterized in that the mixture of the composition (A) and the component (B) is heated at 170°C to 230°C.

## Patentansprüche

1. Wärmehärtbare, wärmebeständige Zweikomponenten-Harzzusammensetzung, die (A) eine Harzzusammensetzung als erste Komponente und (B) einen Härter für ein Epoxyharz als zweite Komponente enthält, wobei die Zusammensetzung (A) durch Erhitzen eines Gemisches aus
(a) einem Polymaleinimidharz, das durch die folgende allgemeine Formel dargestellt wird: 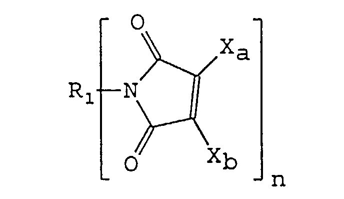 (in der R₁ eine organische Grupe, die eine Valenz von n hat, darstellt; Xₐ und X_{b} monovalente Atome oder Gruppen darstellen, die gleich oder verschieden sind und unter einem Wasserstoffatom, Halogenatom und einer organischen Gruppe ausgewählt sind; und n 1 bis 4 darstellt);
(b) einem Epoxyharz, das mindestens zwei Epoxygruppen in einem Molekül hat, und
(c) einer Verbindung, die mindestens eine Hydroxylgruppe, mindestens eine Carboxylgruppe oder sowohl mindestens eine Hydroxylgruppe als auch mindestens eine Carboxylgruppe im Molekül enthält, hergestellt wird, wobei die Menge der Verbindung als die Komponente (c) der Zusammensetzung (A) im Bereich von 0,1 bis 5 Gew.-Teile, bezogen auf 100 Gew.-Teile Polymaleinimidharz als die Komponente (a) der Zusammensetzung (A) liegt, und die Zusammensetzung (A) durch Erhitzen des Gemisches aus den Komponenten (a), (b) und (c) der Zusammensetzung (A) auf 110°C bis 160°C hergestellt wird.

2. Zusammensetzung nach Anspruch 1, dadurch gekennzeichnet, daß die Zusammensetzung (A) außerdem mindestens ein Glied, das aus der Gruppe bestehend aus Allylalkohol, Furfurylalkohol, Divinylbenzol, Vinyltoluol, Styrol, N-Vinylpyrrolidon, Triallyltrimellitat, Triallylisocyanurat, Triallylcyanurat, Diallylphthalat, Acrylaten, Methacrylaten und Hydroxycyclopentadien ausgewählt ist, enthält.

3. Zusammensetzung nach Anspruch 1, die außerdem mindestens ein Glied, das aus der Gruppe bestehend aus einem anorganischen Füllstoff und einem Metallpulver ausgewählt ist, enthält.

4. Zusammensetzung nach Anspruch 1, die außerdem mindestens ein Glied, das aus der Gruppe bestehend aus einem Siliconharz. Festkautschuk und Flüssigkautschuk ausgewählt ist, enthält.

5. Zusammensetzung nach Anspruch 1, dadurch gekennzeichnet, daß das Polymaleinimidharz als die Komponente (a) der Zusammensetzung (A) mindestens ein Glied ist, das aus der Gruppe bestehend aus N,N'-4,4'-Diphenyletherbismaleinimid, N,N'-4,4'-Diphenylsulfonbismaleinimid, N,N'-4,4'-Diphenylmethanbismaleinimid, N,N'-Phenylenbismaleinimid, N,N'-3,3'-Dimethyl-5,5'-diethyl-4,4'-diphenylmethanbismaleinimid, einem Trinuclid derselben und einem Tetranuclid derselben ausgewählt ist.

6. Zusammensetzung nach Anspruch 1, dadurch gekennzeichnet, daß das Epoxyharz als die Komponente (b) der Zusammensetzung (A) mindestens ein Glied ist, das aus der Gruppe bestehend einem Bisphenol A-Epoxyharz, einem Bisphenol F-Epoxyharz, einem Epoxyharz vom Typ Kresol-Novolak, einem Epoxyharz vom Typ Phenol-Novolak, einem Epoxyharz, das aus glycidyliertem Amin besteht, aliphatischen und alicyclischen Epoxyharzen, einem Epoxyharz mit einem heterocyclischen Ring und einem Epoxyharz, das eine Siloxanbindung enthält, ausgewählt ist.

7. Zusammensetzung nach Anspruch 1, dadurch gekennzeichnet, daß die Verbindung, die mindestens eine Hydroxylgruppe enthält, als die Verbindung (c) der Zusammensetzung (A) mindestens ein Glied ist, das aus der Gruppe bestehend aus Phenol, Kresolen, Xylenolen, Hydroxylmethylbenzoat, Nonylphenol, Methoxyphenol, p-Octylphenol, t-Butylphenol, Phenylphenol, Polyoxyethylenalkylphenylether, Tetrahydronaphthol, Menthol, Phenylethylalkohol, Benzylalkohol, Cyclohexanol, Hydroxyacetophenon, Hydroxybenzaldehyd, Hydroxybenzylalkohol, Hydroxybiphenyl, Hydroxymethoxybenzaldehyd, Hydroxymethoxyacetophenon, Hydroxymethoxydiphenyl, Hydroxymethoxypropenylbenzol, Hydroxymethylpyron, Hydroxypropionphenon, Dihydroxybenzaldehyd, Resorzin, Hexylresorzin, Methylresorzin, Pyrogallol, Methylpyrogallol, Dihydroxyacetophenon, Dihydroxybenzophenon, Dihydroxybiphenyl, Dihydroxynaphthalin, Cyclohexandiol, Dihydroxybenzylalkohol, Hydroxyphenethylalkohol, Butandiol, Hexantriol, Katechol, Hydrochinon, Dihydroxytoluol, Hexindiol, Inositol, Pentandiol, Hexandiol, Phloroglucin, Purpurin, Chinizarin, Anthrarufin, Bishydroxyphenylpropan, Bishydroxyphenylsulfon, Propandiol, Butylpyro-Katechol, Chlorhydrochinon, Dicyanohydrochinon, Dihydroxyaceton, Tetrahydroxyanthracen, Dihydroxydiphenylmethan, Dodecandiol, Methylpentandiol, 1,3-Bis(3-hydroxylpropyl)tetramethyldisiloxan, Vanillylalkohol, Phenolharzen und Alkoholen ausgewählt ist.

8. Zusammensetzung nach Anspruch 1, dadurch gekennzeichnet, daß die Verbindung, die mindestens eine Carboxylgruppe als die Komponente (c) der Zusammensetzung (A) enthält, mindestens ein Glied ist, das aus der Gruppe bestehend aus Benzoesäure, Phenylessigsäure, Phenylpropansäure, Phenylbuttersäure, Brombenzoesäure, Toluylsäure, Methoxybenzoesäure, Cyclohexancarbonsäure, Dicarboxydiphenyl, Malonsäure, Mellitsäure, Pyromellitsäure, Trimellitsäure, Phthalsäure und Isophthalsäure ausgewählt ist.

9. Zusammensetzung nach Anspruch 1, dadurch gekennzeichnet, daß die Verbindung, die mindestens eine Hydroxylgruppe und mindestens eine Carboxylgruppe enthält, als die Verbindung (c) der Zusammensetzung (A) mindestens ein Glied ist, das aus der Gruppe bestehend aus Benzilsäure, Kaffeesäure, Kamphersäure, Kresotinsäure, Gallussäure, Dihydroxybenzoesäure, Hydroxymethoxybenzoesäure, Mandelsäure, Hydroxymethylbenzoesäure, Phenolphthalin, Protocatechusäure, Chinasäure, Hydroxynaphthoesäure, Hydroxyphenylessigsäure, Hydroxyphenylisovaleriansäure, Hydroxyphenylpropionsäure, Hydroxytoluylsäure und Tropasäure ausgewählt ist.

10. Zusammensetzung nach Anspruch 1, dadurch gekennzeichnet, daß der Epoxyharzhärter als die Komponente (B) mindestens ein Glied ist, das aus der Gruppe bestehend aus einem Polyamin, einem Säureanhydrid, einem mehrwertigen Phenol, einem Imidazol, einem Amin, einem Dicyandiamid, einem Polymercaptan und einem Oniumsalz ausgewählt ist.

11. Zusammensetzung nach Anspruch 9, dadurch gekennzeichnet, daß das Polyamin mindestens ein Glied ist, das aus der Gruppe bestehend aus Diaminodiphenylmethan, Diaminodiphenylsulfon, meta-Phenylendiamin, Diaminodiphenylether und Xylylendiamin ausgewählt ist.

12. Zusammensetzung nach Anspruch 9, dadurch gekennzeichnet, daß das Säureanhydrid mindestens ein Glied ist, das aus der Gruppe bestehend aus Methyltetrahydrophthalsäureanhydrid, Methylhexahydrophthalsäureanhydrid, Trialkyltetrahydrophthalsäureanhydrid, Pyromellitsäureanhydrid, Benzophenontetracarbonsäureanhydrid und Methylcyclohexendicarbonsäureanhydrid ausgewählt ist.

13. Zusammensetzung nach Anspruch 9, dadurch gekennzeichnet, daß das mehrwertige Phenol mindestens ein Glied ist, das aus der Gruppe bestehend aus Bishydroxyphenylpropan, Bishydroxyphenylmethan und einem Novolak-Phenol-Harz ausgewählt ist.

14. Zusammensetzung nach Anspruch 9, dadurch gekennzeichnet, daß das Imidazol mindestens ein Glied ist, das aus der Gruppe bestehend aus 2-Methylimidazol, 2-Phenylimidazol und 2-Ethyl-4-methylimidazol ausgewählt ist.

15. Zusammensetzung nach Anspruch 1, dadurch gekennzeichnet, daß die Menge des Epoxyharzes als die Komponente (b) der Zusammensetzung (A) im Bereich von 20 bis 500 Gew.-Teilen, bezogen auf 100 Gew.-Teile des Polymaleinimidharzes als die Komponente (a) der Zusammensetzung (A), liegt.

16. Zusammensetzung nach Anspruch 1, dadurch gekennzeichnet, daß die Menge des Epoxyharzes als die Komponente (b) der Zusammensetzung (A) im Bereich von 50 bis 300 Gew.-Teilen, bezogen auf 100 Gew.-Teile des Polymaleinimidharzes als die Komponente (a) der Zusammensetzung (A), liegt.

17. Zusammensetzung nach Anspruch 1, dadurch gekennzeichnet, daß die Menge des Epoxyharzhärters als die Komponente (B) im Bereich von 0,2 bis 60 Gew.-Teilen, bezogen auf 100 Gew.-Teile der Zusammensetzung (A), liegt.

18. Zusammensetzung nach Anspruch 1, dadurch gekennzeichnet, daß das Gemisch aus der Zusammensetzung (A) und der Komponente (B) auf 80°C bis 250°C erhitzt werden.

19. Zusammensetzung nach Anspruch 1, dadurch gekennzeichnet, daß das Gemisch aus der Zusammensetzung (A) und der Komponente (B) auf 170°C bis 230°C erhitzt werden.

## Revendications

1. Composition de résine thermodurcissable, en deux parties, résistant à la chaleur comprenant (A) une composition de résine en tant que première partie et (B) un durcisseur d'une résine époxy en tant que deuxième partie, ladite composition (A) étant préparée en chauffant un mélange de
(a) une résine de polymaléimide représentée par la formule générale suivante: 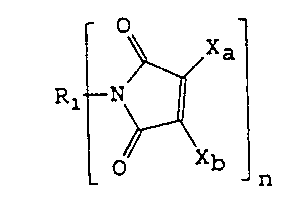 (dans laquelle R₁ représente un groupe organique ayant une valence de n, Xₐ et X_{b} représente des atomes ou groupes monovalents qui sont identiques ou différents et choisis parmi un atome d'hydrogène, un atome d'halogène, et un groupe organique, et n vaut de 1 à 4),
(b) une résine époxy ayant au moins deux groupes époxy dans sa molécule et
(c) un composé contenant au moins un groupe hydroxyle, au moins un groupe carboxyle, ou à la fois au moins un groupe hydroxyle et au moins un groupe carboxyle dans sa molécule, où la quantité du composé en tant que composant (c) de la composition (A) est dans la gamme de 0,1 à 5 parties en poids sur la base de 100 parties en poids de la résine de polymaléimide en tant que composant (a) de la composition (A), et ladite composition (A) est préparée en chauffant entre 110°C et 160°C le mélange des composants (a), (b) et (c) de la composition (A).

2. Composition selon la revendication 1, caractérisée en ce que la composition (A) contient en outre au moins un élément choisi parmi le groupe constitué de l'alcool allylique, de l'alcool furfurylique, du divinylbenzène, du vinyltoluène, du styrène, de la N-vinylpyrrolidone, du triméllitate de triallyle, de l'isocyanurate de triallyle, du cyanurate de triallyle, du phtalate de diallyle, d'acrylates, de méthacrylates et de l'hydroxycyclopentadiène.

3. Composition selon la revendication 1, contenant en outre au moins un élément choisi parmi le groupe constitué d'une charge inorganique et d'une poudre métallique.

4. Composition selon la revendication 1, contenant en outre au moins un élément choisi parmi le groupe constitué d'une résine de silicone, d'un caoutchouc solide et d'un caoutchouc liquide.

5. Composition selon la revendication 1, caractérisée en ce que la résine polymaléimide en tant que composant (a) de la composition (A), est au moins un élément choisi parmi le groupe constitué du N,N'-4, 4'-diphénylétherbismaléimide, du N,N'-4, 4'-diphénylsulfonebismaléimide, du N, N' -4,4'-diphénylméthanebismaléimide, du N, N' -phénylènebismaléimide, du N, N'-3,3'-diméthyl-5,5' -diéthyl-4,4'-diphénylméthanebismaléimide, d'un trinucléide de ceux-ci et d'un tétranucléide de ceux-ci.

6. Composition selon la revendication 1, caractérisée en ce que la résine époxy en tant que composant (b) de la composition (A), est au moins un élément choisi parmi le groupe constitué d'une résine époxy de bisphénol A, d'une résine époxy de bisphénol F, d'une résine époxy de type novolaque crésolyque, d'une résine époxy de type novolaque phénolique, d'une résine époxy comprenant une amine glycidylée, de résines époxy aliphatiques et alicycliques, d'une résine époxy ayant un noyau hétérocyclique, et d'une résine époxy contenant une liaison siloxane.

7. Composition selon la revendication 1, caractérisée en ce que le composé contenant au moins un groupe hydroxyle en tant que composant (c) de la composition (A), est au moins un élément choisi parmi le groupe constitué du phénol, de crésols, de xylénols, du benzoate d'hydroxyméthyle, du nonylphénol, du méthoxyphénol, du p-octylphénol, du t-butylphénol, du phénylphénol, du polyoxyéthylènealkylphényléther, du tétrahydronaphtol, du menthol, de l'alcool phényléthylique, de l'alcool benzylique, du cyclohexanol, de l'hydroxyacétophénone, de l'hydroxybenzaldéhyde, de l'alcool hydroxybenzylique, de l'hydroxybiphényle, de l'hydroxyméthoxybenzaldéhyde, de l'hydroxyméthoxyacétophénone, de l'hydroxyméthoxydiphényle, de l'hydroxyméthoxypropénylbenzène, de l'hydroxyméthylpyrone, de l'hydroxypropiophénone, du dihydroxybenzaldéhyde, du résorcinol, de l'hexylrésorcinol, du méthylrésorcinol, du pyrogallol, du méthylpyrogallol, de la dihydroxyacétophénone, de la dihydroxybenzophénone, du dihydroxy-biphényle, du dihydroxynaphtalène, du cyclohexanediol, de l'alcool dihydroxybenzylique, de l'alcool hydroxyphénéthylique, du butanediol, de l'hexanetriol, du catéchol, de l'hydroquinone, du dihydroxytoluène, de l'hexynediol, de l'inositol, du pentanediol, de l'hexanediol, du phloroglucinol, de la purpurine, de la quinizarine, de l'anthrarufine, du bishydroxyphénylpropane, de la bishydroxyphénylsulfone, du propanediol, du butylpyrocatéchol, de la chlorohydroquinone, de la dicyanohydroquinone, de la dihydroxyacétone, du tétrahydroxy-anthracène, du dihydroxydiphénylméthane, du dodécane-diol, du méthylpentanediol, du 1,3-bis(3-hydroxyl-propyl)tétraméthyldisiloxane, de l'alcool vanillique, de résines phénoliques et d'alcools.

8. Composition selon la revendication 1, caractérisée en ce que le composé contenant au moins un groupe carboxyle en tant que composant (c) de la composition (A), est au moins un élément choisi parmi le groupe constitué de l'acide benzoïque, de l'acide phénylacétique, de l'acide phénylpropanoïque, de l'acide phénylbutyrique, de l'acide bromobenzoïque, de l'acide toluique, de l'acide méthoxybenzoïque, de l'acide cyclohexanecarboxylique, du dicarboxydiphényle, de l'acide malonique, de l'acide méllitique, de l'acide pyromellitique, de l'acide trimellitique, de l'acide phtalique et de l'acide isophtalique.

9. Composition selon la revendication 1, caractérisée en ce que le composé contenant au moins un groupe hydroxyle et au moins un groupe carboxyle en tant que composant (c) de la composition (A), est au moins un élément choisi parmi le groupe constitué de l'acide benzylique, de l'acide caféique, de l'acide camphorique, de l'acide crésotinique, de l'acide gallique, de l'acide dihydroxybenzoïque, de l'acide hydroxyméthoxybenzoïque, de l'acide mandélique, de l'acide hydroxyméthylbenzoïque, de la phénolphtaline, de l'acide protocatéchique, de l'acide quinique, de l'acide hydroxynaphtoïque, de l'acide hydroxyphénylacétique, de l'acide hydroxyphénylisovalérique, de l'acide hydroxyphénylpropionique, de l'acide hydroxytoluique et de l'acide tropique.

10. Composition selon la revendication 1, caractérisée en ce que le durcisseur de résine époxy en tant que composant (B), est au moins un élément choisi parmi le groupe constitué d'une polyamine, d'un anhydride d'acide, d'un phénol polyhydrique, d'un imidazole, d'une amine, d'un dicyandiamide, d'un polymercaptan, et d'un sel d'onium.

11. Composition selon la revendication 9, caractérisée en ce que la polyamine est au moins un élément choisi parmi le groupe constitué du diaminodiphénylméthane, de la diaminodiphénylsulfone, de la métaphénylènediamine, du diaminodiéphényléther et de la xylylènediamine.

12. Composition selon la revendication 9, caractérisée en ce que l'anhydride d'acide est au moins un élément choisi parmi le groupe constitué de l'anhydride méthyltétrahydrophtalique, de l'anhydride méthylhexahydrophtalique, de l'anhydride trialkyltétrahydrophtalique, de l'anhydride pyromellitique, de l'anhydride benzophénonetétracarboxylique et de l'anhydride méthylcyclohexènedicarboxylique.

13. Composition selon la revendication 9, caractérisée en ce que le phénol polyhydrique est au moins un élément choisi parmi le groupe constitué du bishydroxyphénylpropane, du bishydroxyphénylméthane et d'une résine phénolique novolaque.

14. Composition selon la revendication 9, caractérisée en ce que l'imidazole est au moins un élément choisi parmi le groupe constitué du 2-méthylimidazole, du 2-phénylimidazole, et du 2-éthyl-4-méthylimidazole.

15. Composition selon la revendication 1, caractérisée en ce que la quantité de la résine époxy en tant que composant (b) de la composition (A) est dans la gamme de 20 à 500 parties en poids sur la base de 100 parties en poids de la résine de polymaléimide en tant que composant (a) de la composition (A).

16. Composition selon la revendication 1, caractérisée en ce que la quantité de la résine époxy en tant que composant (b) de la composition (A) est dans la gamme de 50 à 300 parties en poids sur la base de 100 parties en poids de la résine de polymaléimide en tant que composant (a) de la composition (A).

17. Composition selon la revendication 1, caractérisée en ce que la quantité du durcisseur de résine époxy en tant que composant (B) est dans la gamme de 0,2 à 60 parties en poids, sur la base de 100 parties en poids de la composition (A).

18. Composition selon la revendication 1, caractérisée en ce que le mélange de la composition (A) et du composant (B) est chauffé entre 80°C et 250°C.

19. Composition selon la revendication 1, caractérisée en ce que le mélange de la composition (A) et du composant (B) est chauffé entre 170°C et 230°C.
